# EUROPEAN PATENT APPLICATION

(11) **EP 4 822 836 A1**
(43) Date of publication of application: **14.10.2026**
(21) Application number: 24928003.3
(22) Date of filing: 13.08.2024
(51) Int. Cl.: H01M 50/103

(54) **BATTERY AND ELECTRICAL APPARATUS**

(30) Priority: 08.03.2024 CN 202410270995
(71) Applicant: Contemporary Amperex Technology Co., Limited, Ningde, Fujian 352100 (CN)
(72) Inventor: WANG, Wenli, Ningde, Fujian 352100 (CN); XU, Chenyi, Ningde, Fujian 352100 (CN); YANG, Haiqi, Ningde, Fujian 352100 (CN); TANG, Yu, Ningde, Fujian 352100 (CN); HUANG, Xiaoteng, Ningde, Fujian 352100 (CN); HOU, Yujia, Ningde, Fujian 352100 (CN)
(74) Representative: Straus, Alexander
(86) International application number: PCT/CN2024/111796
(87) International publication number: WO 2025/185072

(57) **Abstract**

A battery (1) and an electric apparatus. The battery (1) comprises a cooling structure (12) and battery cells (13), wherein there are at least two battery cells (13), and the battery cells (13) are sequentially arranged. Each battery cell (13) comprises a housing (131) and an electrode assembly, the housing (131) forming a first accommodation cavity, and the first accommodation cavity being used for accommodating the electrode assembly; the housing (131) is provided with a first surface (1311), the first surface (1311) corresponding to the at least one battery cell (13) being recessed towards the first accommodation cavity to form a cooling clearance area (13111), and a cooling structure (12) being provided in each cooling clearance area (13111).

## Description

### CROSS-REFERENCE TO RELATED APPLICATIONS

The present disclosure is based on and claims priority to Chinese Patent Application No. 202410270995.7, filed on March 08, 2024 and entitled "BATTERY AND ELECTRIC APPARATUS", which is incorporated herein by reference in its entirety.

### TECHNICAL FIELD

The present disclosure relates to the technical field of batteries, and in particular, to a battery and an electric apparatus.

### BACKGROUND

New energy batteries are more and more widely used in daily life and industry. For example, new energy vehicles equipped with batteries have been widely used. In addition, batteries have also been increasingly used in the field of energy storage and the like.

In the new energy vehicles equipped with batteries, battery cells in the batteries may be used to provide the power in whole or in part. During use, a cooling structure is arranged outside the first surface of the case of the battery cell, and the cooling structure is filled with a cooling liquid to cool the battery cell. However, the cooling structure arranged outside the case reduces the space available for the battery cell, which in turn reduces the volume utilization rate of the battery.

### SUMMARY OF THE INVENTION

To address the aforementioned technical problems, embodiments of the present disclosure provide a battery and an electric apparatus. In the battery, a case of a battery cell provides a cooling clearance region for a cooling structure, such that the space available for the battery cell is increased, thereby increasing the volume utilization rate of the battery.

The present disclosure is implemented through the following technical solution.

In a first aspect, the present disclosure provides a battery. The battery includes a cooling structure and battery cells. At least two battery cells are provided and arranged in sequence. The battery cell includes a case and an electrode assembly. A first accommodating cavity is formed in the case, and the first accommodating cavity is configured to accommodate the electrode assembly. The case is provided with a first surface. The corresponding first surface of at least one of the battery cells is recessed toward the first accommodating cavity to form a cooling clearance region. A cooling structure is arranged in each cooling clearance region.

In the battery provided in the present disclosure, the case is provided with the first surface, the corresponding first surface of at least one of the battery cells is recessed toward the first accommodating cavity to form the cooling clearance region, and the cooling structure is arranged in each cooling clearance region, such that the cooling structure cools the corresponding battery cell. At the same time, the cooling structure is arranged in the cooling clearance region, which is equivalent to the case itself providing at least a part of the space for the cooling structure. In other words, the case provides a part of the space for the cooling structure, and the cooling structure occupies another part of the space outside the case. Alternatively, the case provides all the space for the cooling structure, and the cooling structure does not need to be located entirely outside the case, which increases the space available for the battery cell, thereby improving the volume utilization rate of the battery.

In an implementable manner provided in the present disclosure, in a direction from the first surface toward the first accommodating cavity, a depth dimension of the cooling clearance region is greater than or equal to a dimension of the cooling structure, and a surface of the cooling structure away from the cooling clearance region is lower than or flush with a surface of a non-recessed region of the first surface.

In the battery provided in the present disclosure, the surface of the cooling structure away from the cooling clearance region is lower than or flush with the surface of the non-recessed region of the first surface, in other words, the case provides all the space for the cooling structure, and the cooling structure does not need to occupy the space outside the case, such that the volume utilization rate of the battery can be further improved.

In an implementable manner provided in the present disclosure, in an extension direction of the first surface, a dimension of the cooling clearance region is greater than the dimension of the cooling structure, and the cooling structure and the cooling clearance region have a clearance gap therebetween.

In the battery provided in the present disclosure, the cooling structure and the cooling clearance region have the clearance gap therebetween, such that when the cooling structure is arranged in the cooling clearance region, a position of the cooling structure in the cooling clearance region can be conveniently adjusted by means of the clearance gap.

In an implementable manner provided in the present disclosure, a portion of the cooling clearance region adjacent to the non-recessed region of the first surface forms a guide surface, and the guide surface extends toward a center of the cooling clearance region.

In the battery provided in the present disclosure, the portion of the cooling clearance region adjacent to the non-recessed region of the first surface forms the guide surface, the cooling structure can enter the cooling clearance region through the guide surface, and the guide surface provides installation guidance for the cooling structure, such that the time for the cooling structure to enter the cooling clearance region can be saved.

In an implementable manner provided in the present disclosure, a surface of the cooling structure facing the cooling clearance region is a smooth surface, a surface of the cooling clearance region facing the cooling structure is a smooth surface, and the cooling structure and the cooling clearance region are in abutting contact.

In the battery provided in the present disclosure, since the surface of the cooling structure facing the cooling clearance region is the smooth surface, the surface of the cooling clearance region facing the cooling structure is the smooth surface, and the cooling structure and the cooling clearance region are in abutting contact, at this time, the cooling structure and the cooling clearance region can be completely fitted together, which increases an area of contact between the cooling structure and the cooling clearance region, thereby enhancing the cooling effect of the cooling structure.

In an implementable manner provided in the present disclosure, the battery cell further includes tabs, the tabs are connected to the electrode assembly, the case is provided with second surfaces, the tabs are arranged on the second surfaces, and the second surfaces are in non-surface contact with the cooling structure.

In the battery provided in the present disclosure, the case is provided with the second surfaces, and the second surfaces are in non-surface contact with the cooling structure, in other words, the first surface and the second surfaces are not the same surface, the tabs are arranged on the second surfaces, and the tabs will not occupy the space of the first surface, such that a position of the first surface recessed toward the first accommodating cavity cannot be affected.

In an implementable manner provided in the present disclosure, in an arrangement direction of the at least two battery cells, the cooling clearance region on each battery cell penetrates through the first surface thereof, a plurality of the cooling clearance regions communicate with each other to form a combined cooling clearance region, one cooling structure is provided, and the cooling structure is arranged in the combined cooling clearance region.

In the battery provided in the present disclosure, in the arrangement direction of the at least two battery cells, the cooling clearance region on each battery cell penetrates through the first surface thereof, the plurality of cooling clearance regions communicate with each other to form the combined cooling clearance region, and one cooling structure is provided, such that the cooling effect of the cooling structure can be enhanced. At the same time, setting the cooling structure as a single unit also facilitates later maintenance.

In an implementable manner provided in the present disclosure, the cooling structure includes a cooling plate and an extension portion. The extension portion is arranged on at least one side of the cooling plate in an extension direction of the cooling plate. The extension portion communicates with the cooling plate, and the extension portion is provided with an opening. The cooling plate is arranged in the combined cooling clearance region, and the extension portion is misaligned with the combined cooling clearance region.

In the battery provided in the present disclosure, the extension portion is misaligned with the combined cooling clearance region to avoid that the extension portion occupies the space of the combined cooling clearance region, thereby ensuring that the space of the combined cooling clearance region is configured to arrange the cooling structure, such that the cooling effect of the cooling structure can be improved.

In an implementable manner provided in the present disclosure, an axial direction of the opening is perpendicular to the extension direction of the cooling plate.

In the battery provided in the present disclosure, the axial direction of the opening is perpendicular to the extension direction of the cooling plate, such that an operator can supply liquid to the extension portion or discharge liquid from the extension portion in a direction perpendicular to the extension direction of the cooling plate. The direction perpendicular to the extension direction of the cooling plate is parallel to a direction in which the first surface is recessed toward the first accommodating cavity and a direction in which the first accommodating cavity faces the first surface, such that operation by the operator can be facilitated.

In an implementable manner provided in the present disclosure, in a direction perpendicular to the arrangement direction within a direction of extension of the cooling clearance region, the cooling clearance region of each battery cell does not penetrate through the first surface thereof, and limiting platforms are formed on both sides of the cooling clearance region to limit the cooling structure.

In the battery provided in the present disclosure, the cooling clearance region of each battery cell does not penetrate through the first surface thereof, and the limiting platforms are formed on both sides of the cooling clearance region to limit the cooling structure, such that the possibility of the cooling structure falling off from the cooling clearance region is reduced.

In an implementable manner provided in the present disclosure, in the direction perpendicular to the arrangement direction within the direction of extension of the cooling clearance region, the limiting platforms formed on both sides are of a same dimension.

In the battery provided in the present disclosure, the limiting platforms formed on both sides are of the same dimension, such that the limiting platforms formed on both sides are of the same strength, which avoids the situation where the dimension difference between the limiting platform on one side and the limiting platform on the other side is too large, resulting in a too large difference in the strength of the limiting platforms on both sides, and then the limiting platform on one side cannot limit the cooling structure.

In an implementable manner provided in the present disclosure, the battery includes a box body, the box body forms a second accommodating cavity, both the cooling structure and the battery cell are accommodated in the second accommodating cavity, a first fixing structure is arranged between the cooling structure and the box body, and the cooling structure is fixed to the box body through the first fixing structure.

In the battery provided in the present disclosure, the first fixing structure is arranged between the cooling structure and the box body, and the cooling structure is fixed to the box body through the first fixing structure, such that the overall structural strength of the battery can be improved and the main vibration frequency can be increased.

In an implementable manner provided in the present disclosure, the first fixing structure includes a first threaded hole formed in the box body, a second threaded hole formed in the cooling structure, and a threaded fastener, and the threaded fastener passes through the first threaded hole and the second threaded hole in sequence to fix the cooling structure and the box body in a threaded manner.

In the battery provided in the present disclosure, since the cooling structure and the box body are fixed in the threaded manner, on the one hand, the cooling structure can be more securely fixed to the box body, and on the other hand, the manner of threaded fixing is a detachable manner, which facilitates later disassembly for maintenance of the cooling structure and the box body.

In an implementable manner provided in the present disclosure, a bonding layer is arranged between the cooling structure and the cooling clearance region, and the cooling structure is bonded in the cooling clearance region through the bonding layer.

In the battery provided in the present disclosure, the bonding layer is arranged between the cooling structure and the cooling clearance region, and the cooling structure is bonded in the cooling clearance region through the bonding layer, such that the phenomenon of the cooling structure shaking in the cooling clearance region can be reduced.

In a second aspect, the present disclosure provides an electric apparatus. The electric apparatus includes the battery provided by any one of the first aspect, the battery being configured to provide electrical energy.

The electric apparatus provided in the present disclosure includes the battery provided by any one of the first aspect, the battery being configured to provide electrical energy, such that the same technical effects can be achieved, namely, in the battery, the case of the battery cell provides the cooling clearance region for the cooling structure, thereby improving the volume utilization rate of the battery.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals.
FIG. 1 is a schematic structural diagram of a battery according to an embodiment of the present disclosure;
FIG. 2 is a schematic structural diagram from a first perspective of a cooling structure arranged in a cooling clearance region of a battery cell in the battery according to an embodiment of the present disclosure;
FIG. 3 is a schematic structural diagram from a second perspective of the cooling structure arranged in the cooling clearance region of the battery cell in the battery according to an embodiment of the present disclosure;
FIG. 4 is a schematic structural diagram from a third perspective of the cooling structure arranged in the cooling clearance region of the battery cell in the battery according to an embodiment of the present disclosure;
FIG. 5 is a schematic structural diagram of the cooling structure in the battery according to an embodiment of the present disclosure;
FIG. 6 is a schematic structural diagram of arrangement of at least two battery cells in the battery according to an embodiment of the present disclosure;
FIG. 7 is a schematic structural view of the battery cell from a first perspective according to an embodiment of the present disclosure; and
FIG. 8 is a schematic structural view of the battery cell from a second perspective according to an embodiment of the present disclosure.

### List of reference numerals:

1-Battery; 11-Box body; 111-Second accommodating cavity; 12-Cooling Structure; 121-Cooling plate; 122-Extension portion; 1221-Opening; 13-Battery cell; 131-case; 1311-First surface; 13111-Cooling clearance region; 13112-Non-recessed region; 1312-Second surface; 13121-Right surface; 13122-Left surface; 132-Positive tab; 133-Negative tab; 134-Guide surface; A-Height direction; B-Length direction; C-Thickness direction.

### DETAILED DESCRIPTION

Embodiments of the technical solutions of the present application will be described in detail below with reference to the accompanying drawings. The following examples are only used to illustrate the technical solutions of the present disclosure more clearly, and are therefore used only as examples, and should not be used to limit the protection scope of the present disclosure.

Unless otherwise defined, all technical and scientific terms used herein have the same meanings as those commonly understood by those skilled in the art to which the present disclosure belongs. The terms used herein are merely for the purpose of describing specific embodiments, but are not intended to limit the present disclosure. The terms "include" and "have" and any variations thereof in the specification and the claims of the present disclosure as well as the above description of the drawings are intended to cover non-exclusive inclusions.

In the description of the embodiments of the present disclosure, the technical terms "first", "second", "third", and the like, are used only to distinguish between different objects and are not to be understood as indicating or implying a relative importance or implicitly specifying the number, particular order, or primary and secondary relationship of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is simply a description of an association of associated objects, which indicates that there may exist three relationships, for example, A and/or B may represent three situations: A exists alone, both A and B exist, and B exists alone. In addition, the character "/" herein generally indicates an "or" relationship between the associated objects.

In the description of the embodiments of the present disclosure, the technical terms "length", "width", "thickness", "upper", "lower", "front", "rear", "left", "right", "vertical", "horizontal", "top", "bottom", "inner", "outer", "circumferential", and the like indicate orientation or position relationships based on the orientation or position relationships shown in the drawings, and are intended only to facilitate and simplify the description of the embodiments of the present disclosure, but are not intended to indicate or imply that a device or element referred to must have a particular orientation or be constructed, operated or used in a particular orientation, and therefore should not be construed as limiting the embodiments of the present disclosure.

In the description of the embodiments of the present disclosure, unless otherwise clearly specified and defined, technical terms "mounting", "connected", "connection", "fixation", and the like should be broadly understood. For example, the connection may be fixed connection, detachable connection or integrated connection, may be mechanical connection or electrical connection, or may be direct connection, indirect connection through an intermediate medium, internal communication between two elements, or interaction relationship between two elements. For those of ordinary skill in the art, the specific meanings of the above terms in the embodiments of the present disclosure can be understood according to specific situations.

In the description of the embodiments of the present disclosure, unless otherwise expressly specified and defined, the technical term "contact" shall be understood in a broad sense, either as direct contact, as contact across an intermediate medium layer, as contact between the two in contact that is substantially free of interaction force, or as contact with interaction force between the two in contact.

In the following, the present disclosure will be described in detail.

At present, new energy batteries are increasingly applied in daily life and industry. New energy batteries are not only applied in energy storage power source systems such as hydropower, thermal power, wind power, and solar power stations, but also widely applied in electric transportation tools, such as electric bicycles, electric motorcycles, and electric vehicles, as well as many fields, such as military equipment. With the continuous expansion of the application field of power batteries, their market demand is also constantly increasing.

In new energy vehicles equipped with batteries, battery modules or battery cells may be used to provide power in whole or in part. The battery cells in the batteries may be used to provide power in whole or in part. During use, the battery cell is provided with a cooling structure, and the cooling structure is filled with a cooling liquid to cool the battery cell. However, due to the fact that the cooling structure is arranged, the space available for the battery cell is reduced, and the volume utilization rate of the battery cell in the battery is decreased. Therefore, how to improve the volume utilization rate of the battery is one of the issues that the industry needs to address.

To address this, an embodiment of the present disclosure provides a battery. The battery includes a cooling structure and battery cells. At least two battery cells are provided and arranged in sequence. The battery cell includes a case and an electrode assembly. A first accommodating cavity is formed in the case, and the first accommodating cavity is configured to accommodate the electrode assembly. The case is provided with a first surface. The corresponding first surface of at least one of the battery cells is recessed toward the first accommodating cavity to form a cooling clearance region. The cooling structure is arranged in each cooling clearance region. By recessing the first surface of the case towards the first accommodating cavity of the case to form the cooling clearance region, and arranging the cooling structure in the cooling clearance region, the case can provide at least some space for the cooling structure, thereby increasing the space available for the battery cell and then improving the volume utilization rate of the battery.

The embodiments of the present disclosure will be described in detail below with reference to the accompanying drawings.

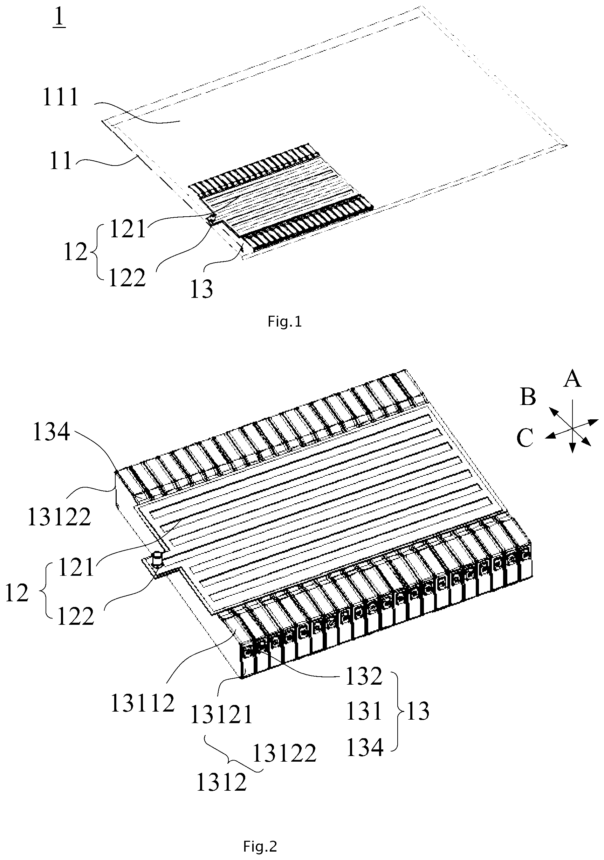

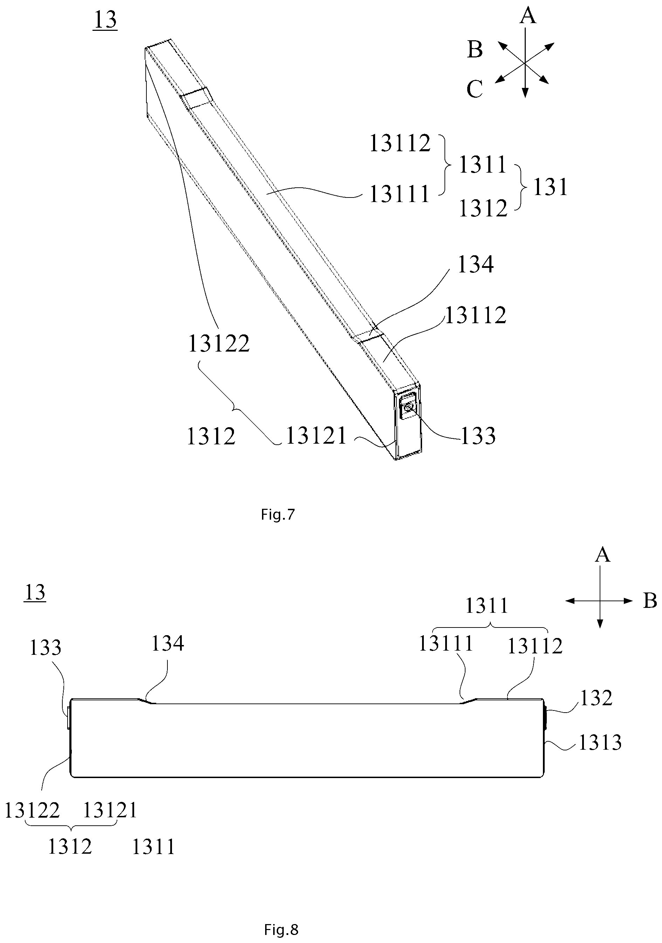

With reference to FIG. 1, FIG. 2, FIG. 3, FIG. 4, FIG. 7, and FIG. 8, an embodiment of the present disclosure provides a battery 1. The battery 1 includes a cooling structure 12 and battery cells 13. At least two battery cells 13 are provided and arranged in sequence. The battery cell 13 includes a case 131 and an electrode assembly. A first accommodating cavity is formed in the case 131, and the first accommodating cavity is configured to accommodate the electrode assembly. The case 131 is provided with a first surface 1311. the corresponding first surface 1311 of at least one of the battery cells 13 is recessed toward the first accommodating cavity to form a cooling clearance region 13111. A cooling structure 12 is arranged in each cooling clearance region 13111.

In the embodiment of the present disclosure, the battery 1 may be an energy storage apparatus. The energy storage apparatus includes an energy storage container, an energy storage electric cabinet, or the like.

In the embodiment of the present disclosure, the battery 1 may be used in, but not limited to, an energy storage power supply system, a vehicle, a ship, an aircraft, and other electric apparatuses.

In the embodiment of the present disclosure, the battery 1 may be a battery module, including at least two battery cells 13, and the at least two battery cells 13 may be connected in series, in parallel or in series-parallel via a busbar component.

In the embodiment of the present disclosure, the battery 1 may be a battery pack, the battery pack includes a box body 11, the at least two battery cells 13, and the cooling structure 12. The at least two battery cells 13 and the cooling structure 12 may be accommodated in a second accommodating cavity 111 formed by the box body 11.

In the embodiment of the present disclosure, the battery cell 13 may be a secondary battery. The secondary battery refers to a battery cell 13 that can be charged to activate the active material and continue to be used after the battery cell 13 is discharged.

In the embodiment of the present disclosure, the battery cell 13 may be a lithium ion battery, a sodium ion battery, a sodium-lithium ion battery, a sodium metal battery, a magnesium ion battery, a nickel-hydrogen battery, a nickel-chromium battery, a lead storage battery, etc., which is not limited in the embodiment of the present disclosure.

In the embodiment of the present disclosure, the battery cell 13 may be a cylindrical battery cell, a prismatic battery cell, a pouch cell, or a battery cell in another shape. The prismatic battery cell includes a square battery cell, a blade battery cell, and a polygonal-prism battery. The shape of the battery cell 13 is not limited in the embodiment of the present disclosure.

In the embodiment of the present disclosure, if the battery cell 13 is a square battery, here, a length dimension of the square battery is greater than a height dimension, that is, the square battery is an elongated battery, which can improve both the volume utilization rate of the battery cell 13 and the energy density of the battery cell 13. Here, it needs to be explained that the volume utilization rate of battery cell 1 refers to the proportion of the effective capacity of battery cell 13 to the total volume, and the energy density of battery cell 13 refers to the energy released by battery cell 13 per unit mass or unit volume, that is, the volumetric specific energy or the mass specific energy. In an implementable manner provided by the embodiment of the present disclosure, a length-to-height ratio of the square battery is greater than 5 and less than 10.

In the embodiment of the present disclosure, at least two battery cells 13 are provided and arranged in sequence. An arrangement direction of the at least two battery cells 13 can be a length direction B of the battery cell 13, a thickness direction C of the battery cell 13, or a height direction A of the battery cell 13, which is not limited in the embodiment of the present disclosure. In an implementable manner provided by the embodiment of the present disclosure, the arrangement direction of the at least two battery cells 13 is the thickness direction C of the battery cell 13.

In the embodiment of the present disclosure, the electrode assembly includes a positive electrode, a negative electrode, and a separator. During the charging and discharging process of the battery cell 13, active ions, such as lithium ions, are intercalated and deintercalated back and forth between the positive electrode and the negative electrode. The separator is arranged between the positive electrode and the negative electrode and can serve to prevent a short circuit between the positive electrode and the negative electrode while allowing the Martian ions to pass through. In some practical applications, the positive electrode may be a positive electrode plate, and the negative electrode may be a negative electrode plate.

In the embodiment of the present disclosure, the electrode assembly may be of a wound structure, with the positive electrode plate and the negative electrode plate forming the wound structure. Of course, the electrode assembly may also be of a stacked structure. The specific structure of the electrode assembly is not limited in the embodiment of the present disclosure.

In the embodiment of the present disclosure, the case 131 is configured to accommodate the electrode assembly, an electrolyte or other components. The case 131 may be a steel shell, an aluminum shell, a plastic shell (such as polypropylene), a composite metal shell (such as a copper-aluminum composite shell), an aluminum-plastic film, or the like.

In the embodiment of the present disclosure, the first accommodating cavity is formed in the case 131, and the electrode assembly is arranged in the first accommodating cavity. An inner contour of the first accommodating cavity may be a regular shape, such as a cube, a cuboid, a cylinder or the like, or may be an irregular shape, which is not limited in the embodiment of the present disclosure.

In the embodiment of the present disclosure, the case 131 is provided with the first surface 1311. For example, if the battery cell 13 is a square battery, the first surface 1311 may be an upper surface of the square battery, the first surface 1311 may be a lower surface of the square battery, the first surface 1311 may be a left surface 13122 of the square battery, the first surface 1311 may be a right surface 13121 of the square battery, the first surface 1311 may be a front surface of the square battery, the first surface 1311 may be a rear surface of the square battery, and the first surface 1311 may also be a surface with the largest area in the square battery. The specific position of the first surface 1311 on the case 131 is not limited in the embodiment of the present disclosure. In an implementable manner provided by the embodiment of the present disclosure, the battery cell 13 is a square battery, the first surface 1311 is the upper surface of the square battery, and the upper surface is a large surface of the square battery. In other words, the upper surface is the surface with the largest area in the square battery.

In the embodiment of the present disclosure, the corresponding first surface 1311 of at least one of the battery cells 13 is recessed toward the first accommodating cavity to form the cooling clearance region 13111. Here, the direction in which the first surface 1311 is recessed toward the first accommodating cavity may be the height direction A of the battery cell 13, the length direction B of the battery cell 13, or the thickness direction C of the battery cell 13, which is not limited in the embodiment of the present disclosure. In an implementable manner provided by the embodiment of the present disclosure, the arrangement direction of the at least two battery cells 13 is the thickness direction C of the battery cell 13, and the direction in which the first surface 1311 is recessed toward the first accommodating cavity is the height direction A of the battery cell 13.

In the embodiment of the present disclosure, the corresponding first surface 1311 of at least one of the battery cells 13 is recessed toward the first accommodating cavity to form the cooling clearance region 13111. Here, the cooling clearance region 13111 may be formed by an edge portion of the first surface 1311 recessed toward the first accommodating cavity; the cooling clearance region 13111 may also be formed by a non-edge portion of the first surface 1311 recessed toward the first accommodating cavity, which is not limited in the embodiment of the present disclosure.

In the embodiment of the present disclosure, the cooling clearance region 13111 is configured to arrange the cooling structure 12. Here, the inner contour shape of the cooling clearance region 13111 can be exactly the same as or can be completely different from the outer contour shape of the cooling structure 12, which is not limited in the embodiment of the present disclosure, either.

In the embodiment of the present disclosure, the cooling structure 12 is configured to cool the battery cell 13. The cooling structure 12 may include a cooling plate 121, and a cooling cavity is formed in the cooling plate 121. The cooling cavity is configured to store a cooling liquid. The cooling liquid may be a liquid that achieves the cooling effect. The cooling liquid may be molten metal or an aqueous solution of ethylene glycol. The type of the cooling liquid is not limited in the embodiment of the present disclosure.

In the battery 1 provided in the embodiment of the present disclosure, the case 131 is provided with the first surface 1311, the corresponding first surface 1311 of at least one of the battery cells 13 is recessed toward the first accommodating cavity to form the cooling clearance region 13111, and the cooling structure 12 is arranged in each cooling clearance region 13111, such that the cooling structure 12 cools the corresponding battery cell 13. At the same time, the cooling structure 12 is arranged in the cooling clearance region 13111, which is equivalent to the case 131 itself providing at least a part of the space for the cooling structure 12. In other words, the case 131 provides a part of the space for the cooling structure 12, and the cooling structure 12 occupies another part of the space outside the case 131. Alternatively, the case 131 provides all the space for the cooling structure 12, and the cooling structure 12 does not need to be located entirely outside the case 131, which increases the space available for the battery cell 13, thereby improving the volume utilization rate of the battery 1.

With reference to FIG. 1, FIG. 3, FIG. 4, and FIG. 5, an embodiment of the present disclosure provides a battery 1, in a direction from the first surface 1311 toward the first accommodating cavity, a depth dimension of the cooling clearance region 13111 is greater than or equal to a dimension of the cooling structure 12, and a surface of the cooling structure 12 away from the cooling clearance region 13111 is lower than or flush with a surface of a non-recessed region 13112 of the first surface 1311.

In the embodiment of the present disclosure, the first surface 1311 includes the cooling clearance region 13111 and the non-recessed region 13112. In other words, the region of the first surface 1311 except for the cooling clearance region 13111 belongs to the non-recessed region 13112. Specifically, please refer to FIG. 2, if the first surface 1311 of the case 131 is the upper surface, the part of the upper surface that is recessed toward the first accommodating cavity is the cooling clearance region 13111, and the part of the upper surface that is not recessed toward the first accommodating cavity can be called the non-recessed region 13112.

In the embodiment of the present disclosure, in the direction from the first surface 1311 toward the first accommodating cavity, if the depth dimension of the cooling clearance region 13111 is greater than the dimension of the cooling structure 12, then the surface of the cooling structure 12 away from the cooling clearance region 13111 is lower than the surface of the non-recessed region 13112 of the first surface 1311; if the depth dimension of the cooling clearance region 13111 is less than the dimension of the cooling structure 12, then the surface of the cooling structure 12 away from the cooling clearance region 13111 is flush with the surface of the non-recessed region 13112 of the first surface 1311.

In the embodiment of the present disclosure, in the direction from the first surface 1311 toward the first accommodating cavity, the depth dimension of the cooling clearance region 13111 is equal to the dimension of the cooling structure 12. The surface of the cooling structure 12 away from the cooling clearance region 13111 is flush with the surface of the non-recessed region 13112 of the first surface 1311. Here, if the surface of the non-recessed region 13112 of the first surface 1311 is a convex surface, then the surface of the cooling structure 12 away from the cooling clearance region 13111 is flush with the highest point of the non-recessed region 13112 of the first surface 1311; if the surface of the non-recessed region 13112 of the first surface 1311 is a concave surface, then the surface of the cooling structure 12 away from the cooling clearance region 13111 is flush with the lowest point of the non-recessed region 13112 of the first surface 1311. Of course, the surface of the non-recessed region 13112 of the first surface 1311 can also be a smooth surface.

In the battery 1 provided in the embodiment of present disclosure, the surface of the cooling structure 12 away from the cooling clearance region 13111 is lower than or flush with the surface of the non-recessed region 13112 of the first surface 1311, in other words, the case 131 provides all the space for the cooling structure 12, and the cooling structure 12 does not need to occupy the space outside the case 131, such that the volume utilization rate of the battery 1 can be further improved.

With reference to FIG. 1, FIG. 3, FIG. 4, and FIG. 5, an embodiment of the present disclosure provides a battery 1, in an extension direction of the first surface 1311, a dimension of the cooling clearance region 13111 is larger than the dimension of the cooling structure 12, and the cooling structure 12 and the cooling clearance region 13111 have a clearance gap therebetween.

In the embodiment of the present disclosure, the extension direction of the first surface 1311 can be either the length direction B of the battery cell 13 or the thickness direction C of the battery cell 13, which is not limited in the embodiment of the present disclosure. In an implementable manner provided by the embodiment of the present disclosure, the arrangement direction of the at least two battery cells 13 is the thickness direction C of the battery cell 13, and the direction in which the first surface 1311 is recessed toward the first accommodating cavity is the height direction A of the battery cell 13. Here, the extension direction of the first surface 1311 is the length direction B of the battery cell 13.

In the embodiment of the present disclosure, in the extension direction of the first surface 1311, the dimension of the cooling clearance region 13111 is greater than the dimension of the cooling structure 12, and the cooling structure 12 and the cooling clearance region 13111 have the clearance gap therebetween. Here, in the extension direction of the first surface 1311, the clearance gap may be formed between the cooling structure 12 and one side of the cooling clearance region 13111; the clearance gap may also be formed between the cooling structure 12 and each of the opposite sides of the cooling clearance region 13111; the clearance gap may also be formed between the cooling structure 12 and the entire peripheral side of the cooling clearance region 13111.

In the battery 1 provided in the embodiment of present disclosure, the cooling structure 12 and the cooling clearance region 13111 have the clearance gap therebetween, such that when the cooling structure 12 is arranged in the cooling clearance region 13111, a position of the cooling structure 12 in the cooling clearance region 13111 can be conveniently adjusted by means of the clearance gap.

With reference to FIG. 1, FIG. 3, FIG. 4, FIG. 5, and FIG. 6, an embodiment of the present disclosure provides a battery 1, a portion of the cooling clearance region 13111 adjacent to the non-recessed region 13112 of the first surface 1311 forms a guide surface 134, and the guide surface 134 extends toward a center of the cooling clearance region 13111.

In the embodiment of the present disclosure, the portion of the cooling clearance region 13111 adjacent to the non-recessed region 13112 of the first surface 1311 forms the guide surface 134. The guide surface 134 extends toward the center of the cooling clearance region 13111. Here, if the cooling clearance region 13111 is of a cube structure, the center of the cooling clearance region 13111 is the body center of the cube; if the cooling clearance region 13111 is of a cuboid structure, the center of the cooling clearance region 13111 is the body center of the cuboid; if the cooling clearance region 13111 is of an irregular structure, the center of the cooling clearance region 13111 is the center of gravity of the irregular structure. Based on this, since the structure of the cooling clearance region 13111 can be varied, the position of the center of the cooling clearance region 13111 can also be varied accordingly. Therefore, the extension direction of the guide surface 134 extending toward the center of the cooling clearance region 13111 can also be varied.

In the battery 1 provided in the embodiment of the present disclosure, the portion of the cooling clearance region 13111 adjacent to the non-recessed region 13112 of the first surface 1311 forms the guide surface 134, the cooling structure 12 can enter the cooling clearance region 13111 through the guide surface 134, and the guide surface 134 provides installation guidance for the cooling structure 12, such that the time for the cooling structure 12 to enter the cooling clearance region 13111 can be saved.

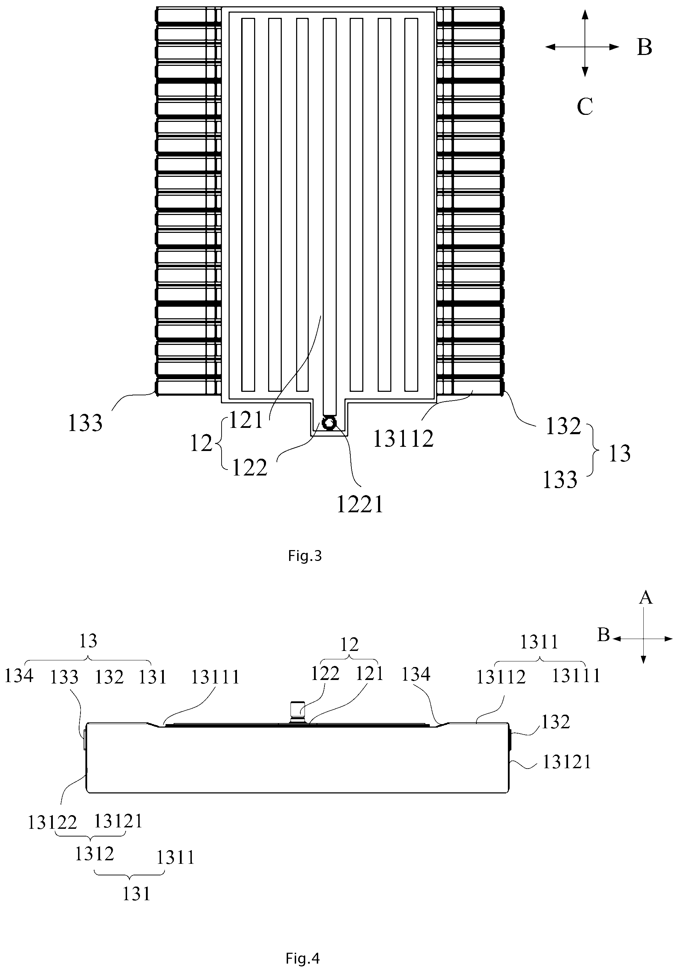

With reference to FIG. 4, FIG. 5, and FIG. 6, an embodiment of the present disclosure provides a battery 1, a surface of the cooling structure 12 facing the cooling clearance region 13111 is a smooth surface, a surface of the cooling clearance region 13111 facing the cooling structure 12 is a smooth surface, and the cooling structure 12 and the cooling clearance region 13111 are in abutting contact.

In the embodiment of the present disclosure, the surface of the cooling structure 12 facing the cooling clearance region 13111 is a smooth surface, and the surface of the cooling clearance region 13111 facing the cooling structure 12 is a smooth surface. In other words, the surfaces of the cooling clearance region 13111 and the cooling structure 12 that come into contact with each other are both smooth surfaces.

In the embodiment of the present disclosure, the surface of the cooling structure 12 not facing the cooling clearance region 13111 can be a non-smooth surface or a smooth surface; correspondingly, the surface of the cooling clearance region 13111 not facing the cooling structure 12 can be a non-smooth surface or a smooth surface, which is not limited in the embodiment of the present disclosure. In an implementable manner provided in the embodiment of the present disclosure, the surface of the cooling structure 12 not facing the cooling clearance region 13111 is a smooth surface, and the surface of the cooling clearance region 13111 not facing the cooling structure 12 is also a smooth surface. In this way, when an operator places the cooling structure 12 in the cooling clearance region 13111, the risk of injury can be reduced.

In the battery 1 provided in the embodiment of the present disclosure, since the surface of the cooling structure 12 facing the cooling clearance region 13111 is the smooth surface, the surface of the cooling clearance region 13111 facing the cooling structure 12 is the smooth surface, and the cooling structure 12 and the cooling clearance region 13111 are in abutting contact, at this time, the cooling structure 12 and the cooling clearance region 13111 can be completely fitted together, which increases an area of contact between the cooling structure 12 and the cooling clearance region 13111, thereby enhancing the cooling effect of the cooling structure 12.

With reference to FIG. 4, FIG. 7, and FIG. 8, an embodiment of the present disclosure provides a battery 1, the battery cell 13 further includes tabs, the tabs are connected to the electrode assembly, and the case 131 is provided with a second surface 1312, the tabs are arranged on the second surface 1312, and the second surface 1312 is in non-surface contact with the cooling structure 12.

In the embodiment of the present disclosure, current can be guided out of the electrode assembly by the tabs, and the tabs include a positive tab 132 and a negative tab 133.

In the embodiment of the present disclosure, the case 131 is provided with the second surface 1312, and the second surface 1312 is in non-surface contact with the cooling structure 12. Here, it should be supplemented that the first surface 1311 is recessed towards the first accommodating cavity to form the cooling clearance region 13111, and the cooling structure 12 is arranged in the cooling clearance region 13111. It can be seen that the recessed part of the first surface 1311 is in surface contact with the cooling structure 12. If the second surface 1312 is in non-surface contact with the cooling structure 12, it means that the first surface 1311 and the second surface 1312 are not the same surface. For example, if the battery cell 13 is a square battery, and the first surface 1311 is the upper surface, the second surface 1312 can be a right surface 13121, the right surface 13121 is not in contact with the cooling structure 12; the second surface 1312 can be a left surface 13122, the left surface 13122 is not in contact with the cooling structure 12, either; the second surface 1312 can be a lower surface, and the lower surface is not in contact with the cooling structure 12, either; the second surface 1312 can be a front surface, and the front surface is in line contact with the cooling structure 12; the second surface 1312 can also be a rear surface, and the rear surface is also in line contact with the cooling structure 12. In an implementable manner provided by the embodiment of the present disclosure, if the tabs include the positive tab 132 and the negative tab 133, the positive tab 132 can be arranged on the right surface 13121 of the second surface 1312, and the negative tab 133 can be arranged on the left surface 13122 of the second surface 1312.

In the battery 1 provided in the embodiment of the present disclosure, the case 131 is provided with the second surface 1312, and the second surface 1312 is in non-surface contact with the cooling structure 12, in other words, the first surface 1311 and the second surface 1312 are not the same surface, the tabs are arranged on the second surface 1312, and the tabs will not occupy the space of the first surface 1311, such that a position of the first surface 1311 recessed toward the first accommodating cavity will not be affected.

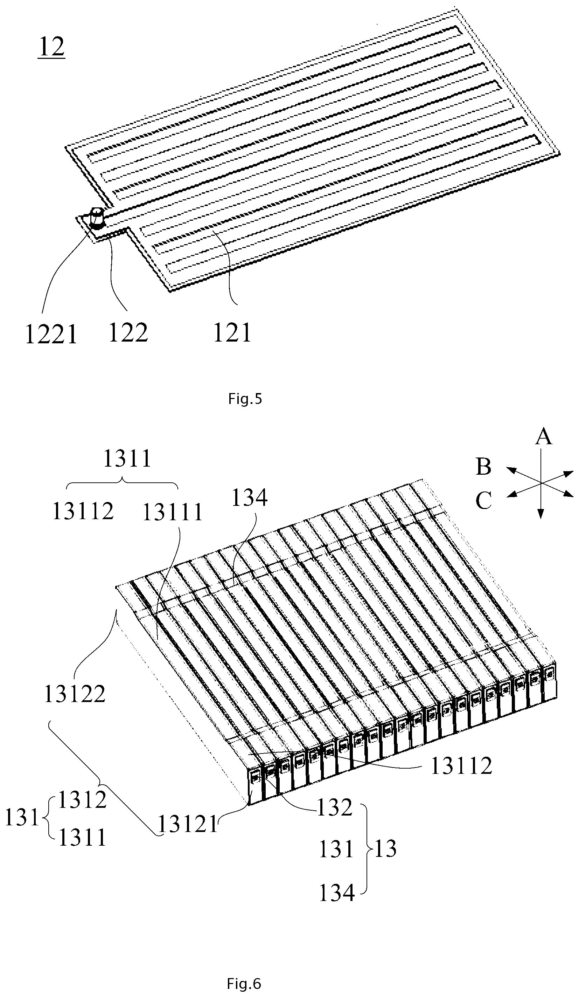

With reference to FIG. 5, FIG. 6, FIG. 7, and FIG. 8, an embodiment of the present disclosure provides a battery 1. In the arrangement direction of the at least two battery cells 13, the cooling clearance region 13111 on each battery cell 13 penetrates through the first surface 1311 thereof, a plurality of the cooling clearance regions 13111 communicate with each other to form a combined cooling clearance region, one cooling structure 12 is provided, and the cooling structure 12 is arranged in the combined cooling clearance region.

In the embodiment of the present disclosure, if the arrangement direction of the at least two battery cells 13 is the thickness direction C of the battery cell 13, in the arrangement direction of the at least two battery cells 13, the cooling clearance region 13111 of each battery cell 13 penetrates through the first surface 1311, and then in the thickness direction C of the battery cell 13, the cooling clearance region 13111 of each battery cell 13 penetrates through the first surface 1311.

In the battery 1 provided in the embodiment of the present disclosure, in the arrangement direction of the at least two battery cells 13, the cooling clearance region 13111 on each battery cell 13 penetrates through the first surface 1311 thereof, the plurality of cooling clearance regions 13111 communicate with each other to form the combined cooling clearance region, and one cooling structure 12 is provided, such that the cooling effect of the cooling structure 12 can be enhanced. At the same time, setting the cooling structure 12 as a single unit also facilitates later maintenance.

With reference to FIG. 2, FIG. 3, and FIG. 5, an embodiment of the present disclosure provides a battery 1, the cooling structure 12 includes a cooling plate 121 and an extension portion 122. The extension portion 122 is arranged on at least one side of the cooling plate 121 in an extension direction of the cooling plate 121. The extension portion 122 communicates with the cooling plate 121, and the extension portion 122 is provided with an opening 1221. The cooling plate 121 is arranged in the combined cooling clearance region, and the extension portion 122 is misaligned with the combined cooling clearance region.

In the embodiment of the present disclosure, a cooling cavity is arranged in the cooling plate 121, and a cooling liquid is arranged in the cooling cavity. The cooling liquid may be a liquid that achieves the cooling effect, or the cooling liquid may be molten metal or an aqueous solution of ethylene glycol. The type of the cooling liquid is not limited in the embodiment of the present disclosure.

In the embodiment of the present disclosure, the extension member is provided with the opening 1221, and the opening 1221 is a position for supplying liquid to the cooling plate 121 and/or discharging liquid from the cooling plate 121.

In the embodiment of the present disclosure, the extension portion 122 is misaligned with the combined cooling clearance region. In other words, the extension portion 122 does not occupy the space of the combined cooling clearance region, that is, the combined cooling clearance region is only configured to arrange the cooling plate 121.

In the embodiment of the present disclosure, the extension portion 122 can be integrated with an upper case 131 in the case 131; the extension portion 122 can be integrated with a lower case 131 in the case 131; if the battery 1 includes the box body 11, the box body 11 forms the second accommodating cavity 111, the second accommodating cavity 111 can accommodate the cooling structure 12 and the battery cell 13, and then the extension portion 122 can also be integrated with surrounding components of the box body 11 of the battery 1 facing the second accommodating cavity 111, which is not limited in the embodiment of the present disclosure.

In the battery 1 provided in the embodiment of the present disclosure, the extension portion 122 is misaligned with the combined cooling clearance region to avoid that the extension portion 122 occupies the space of the combined cooling clearance region, thereby ensuring that the space of the combined cooling clearance region is configured to arrange the cooling structure 12, such that the cooling effect of the cooling structure 12 can be improved.

With reference to FIG. 2, FIG. 3, and FIG. 5, an embodiment of the present disclosure provides a battery 1, and an axial direction of the opening 1221 is perpendicular to the extension direction of the cooling plate 121.

In the battery 1 provided in the embodiment of the present disclosure, the axial direction of the opening 1221 is perpendicular to the extension direction of the cooling plate 121, such that an operator can supply liquid to the extension portion 122 or discharge liquid from the extension portion 122 in a direction perpendicular to the extension direction of the cooling plate 121. The direction perpendicular to the extension direction of the cooling plate 121 is parallel to a direction in which the first surface 1311 is recessed toward the first accommodating cavity and a direction in which the first accommodating cavity faces the first surface 1311, such that operation by the operator can be convenient.

With reference to FIG. 2, FIG. 4, FIG. 7, and FIG. 8, an embodiment of the present disclosure provides a battery 1, in a direction perpendicular to the arrangement direction within a direction of extension of the cooling clearance region 13111, the cooling clearance region 13111 of each battery cell 13 does not penetrate through the first surface 1311 thereof, and limiting platforms are formed on both sides of the cooling clearance region 13111 to limit the cooling structure 12.

In the embodiment of the present disclosure, if the direction in which the first surface 1311 is recessed toward the first accommodating cavity is the height direction A of the battery cell 13, and the arrangement direction of the at least two battery cells 13 is the thickness direction C of the battery cell 13, then in the direction of extension of the cooling clearance region 13111, the direction perpendicular to the arrangement direction is the length direction B of the battery cell 13.

In the embodiment of the present disclosure, the limiting platforms are formed on both sides of the cooling clearance region 13111. The limiting platforms can limit the cooling structure 12. Here, the outer contour of the limiting platform can be a regular structure such as a cube or cuboid, such that processing and manufacturing can be facilitated. Of course, the outer contour of the limiting platform can also be an irregular structure, which is not limited in the embodiment of the present disclosure. Of course, the outer contours of the limiting platforms on both sides can be the same structure or different structures.

In the embodiment of the present disclosure, in the direction perpendicular to the arrangement direction within the direction of extension of the cooling clearance region 13111, the dimensions of the limiting platforms formed on both sides can be the same or different, which is not limited in the embodiment of the present disclosure, either.

In the battery 1 provided in the embodiment of the present disclosure, the cooling clearance region 13111 of each battery cell 13 does not penetrate through the first surface 1311 thereof, and the limiting platforms are formed on both sides of the cooling clearance region 13111 to limit the cooling structure 12, such that the possibility of the cooling structure 12 falling off from the cooling clearance region 13111 is reduced.

With reference to FIG. 2, FIG. 4, FIG. 7, and FIG. 8, an embodiment of the present disclosure provides a battery 1, and in the direction perpendicular to the arrangement direction within the direction of extension of the cooling clearance region 13111, the limiting platforms formed on both sides are of the same dimension.

In the battery 1 provided in the embodiment of the present disclosure, the limiting platforms formed on both sides are of the same dimension, such that the limiting platforms formed on both sides are of the same strength, which avoids the situation where the dimension difference between the limiting platform on one side and the limiting platform on the other side is too large, resulting in a too large difference in the strength of the limiting platforms on both sides, and then the limiting platform on one side cannot limit the cooling structure 12.

With reference to FIG. 1 and FIG. 2, an embodiment of the present disclosure provides a battery 1, the battery 1 includes a box body 11, the box body 11 forms the second accommodating cavity 111, both the cooling structure 12 and the battery cell 13 are accommodated in the second accommodating cavity 111, a first fixing structure is arranged between the cooling structure 12 and the box body 11, and the cooling structure 12 is fixed to the box body 11 through the first fixing structure.

In the embodiment of the present disclosure, the box body 11 may include a lower box body and an upper cover. The lower box body 11 is provided with the opening 1221, and the upper cover is arranged on the lower box body 11 in a covering manner to close the same, thereby forming the second accommodating cavity 111.

In the embodiment of the present disclosure, the box body 11 may be used as a part of a chassis structure of the vehicle. For example, a part of the box body 11 may become at least a part of a floor of the vehicle, or a part of the box body 11 may become at least a part of a cross beam and a longitudinal beam.

In the embodiment of the present disclosure, the inner contour of the second accommodating cavity 111 can be a regular shape, such as a cube, a cuboid, a cylinder, etc. The inner contour of the second accommodating cavity 111 can also be an irregular shape. Here, it should be supplemented that the inner contour shape of the second accommodating cavity 111 is not limited in the embodiment of the present disclosure.

In the embodiment of the present disclosure, the first fixing structure is arranged between the cooling structure 12 and the box body 11. The cooling structure 12 is fixed to the box body 11 through the first fixing structure. Since the bonding fixing method has the advantages of convenient operation and low cost, specifically, the first fixing structure can be a bonding layer. The bonding layer is arranged between the cooling structure 12 and the box body 11, and the cooling structure 12 is bonded and fixed to the box body 11 through the bonding layer.

In the embodiment of the present disclosure, the first fixing structure is arranged between the cooling structure 12 and the box body 11. The cooling structure 12 is fixed to the box body 11 through the first fixing structure. Compared with adhesive fixing, a snap-fit fixing method is a detachable method, which makes it convenient for the operator to replace or repair the cooling structure 12 and the box body 11. Specifically, the first fixing structure can be a snap-fit protrusion arranged on the box body 11 and a snap-fit groove formed in the cooling structure 12. The snap-fit protrusion and the snap-fit groove are adapted to snap-fit and fix the cooling structure 12 to the box body 11.

In the embodiment of the present disclosure, the first fixing structure is arranged between the cooling structure 12 and the box body 11. The cooling structure 12 is fixed to the box body 11 through the first fixing structure. Compared with snap-fit, the manner of threaded fixing is more reliable. Specifically, the first fixing structure includes a first threaded hole formed in the box body 11, a second threaded hole formed in the cooling structure 12, and a threaded fastener, and the threaded fastener passes through the first threaded hole and the second threaded hole in sequence to fix the cooling structure 12 and the box body 11 in a threaded manner. Here, it should be supplemented that the fixing method of the cooling structure 12 fixed on the box body 11 is not limited in the embodiment of the present disclosure.

In the embodiment of the present disclosure, in order to protect internal components of the box body 11, absorb some of the impact and vibration, reduce the impact on the internal components of the box body 11, and ensure the safety and stability of the battery 1, while increasing the height of the battery 1, an expansion beam is also arranged on the side of the box body 11 close to the second accommodating cavity 111. The first fixing structure is arranged between the expansion beam and the cooling structure 12 to fix the cooling structure 12 to the expansion beam.

In the battery 1 provided in the embodiment of the present disclosure, the first fixing structure is arranged between the cooling structure 12 and the box body 11, and the cooling structure 12 is fixed to the box body 11 through the first fixing structure, such that the overall structural strength of the battery 1 can be improved and the main vibration frequency can be increased.

With reference to FIG. 1 and FIG. 2, an embodiment of the present disclosure provides a battery 1, the first fixing structure includes the first threaded hole formed in the box body 11, the second threaded hole formed in the cooling structure 12, and the threaded fastener, and the threaded fastener passes through the first threaded hole and the second threaded hole in sequence to fix the cooling structure 12 and the box body 11 in the threaded manner.

An embodiment of the present disclosure provides a battery 1, since the cooling structure 12 and the box body 11 are fixed in the threaded manner, on the one hand, the cooling structure 12 can be more securely fixed to the box body 11, on the other hand, the manner of threaded fixing is a detachable manner, which facilitates later disassembly for maintenance of the cooling structure 12 and the box body 11.

With reference to FIG. 4, an embodiment of the present disclosure provides a battery 1, the bonding layer is arranged between the cooling structure 12 and the cooling clearance region 13111, and the cooling structure 12 is bonded in the cooling clearance region 13111 through the bonding layer.

In the embodiment of the present disclosure, the bonding layer is arranged between the cooling structure 12 and the cooling clearance region 13111. Here, the bonding layer refers to a layered structure formed by various colloids with adhesive properties during the bonding process. For example, if an adhesive is applied to the cooling clearance region 13111, and then the cooling structure 12 is placed in the cooling clearance region 13111 with the adhesive, the cooling structure 12 is bonded in the cooling clearance region 13111 through the adhesive, and the layered structure can be formed after the adhesive cures. Here, it should be supplemented that the bonding layer can also conduct heat, thus facilitating the transfer of heat from the case to the cooling structure 12.

In the battery 1 provided in the embodiment of the present disclosure, the bonding layer is arranged between the cooling structure 12 and the cooling clearance region 13111, and the cooling structure 12 is bonded in the cooling clearance region 13111 through the bonding layer, such that the phenomenon of the cooling structure 12 shaking in the cooling clearance region 13111 can be reduced.

An embodiment of the present disclosure provides an electric apparatus. The electric apparatus includes the battery 1 according to any one of the embodiments of the first aspect, the battery 1 being configured to provide electrical energy.

In the embodiments of the present disclosure, the electric apparatus may be, but is not limited to, a mobile phone, a tablet, a laptop, an electric toy, an electric tool, a battery vehicle, an electric vehicle, a ship, a spacecraft, and so on. The electric toy may include a stationary or mobile electric toy, for example, a game console, an electric toy car, an electric toy ship, an electric toy aircraft, or the like. The spacecraft may include an aircraft, a rocket, a space shuttle or a spaceship, or the like.

The above embodiments are merely used for describing the technical solution of the present disclosure, instead of limiting the present disclosure; although the present disclosure is described in detail with reference to the foregoing embodiments, persons of ordinary skill in the art should understand that they can still make modifications on the technical solution recorded in the above embodiments, or perform equivalent replacements on a part or all of technical features thereof. These modifications or replacements do not make the essence of the corresponding technical solution depart from the scope of the technical solutions of various embodiments of the present disclosure, and shall fall within the scope of the claims and the specification of the present disclosure. In particular, the technical features mentioned in the various embodiments can be combined in any manner as long as there is no structural conflict. The present disclosure is not limited to the specific embodiments disclosed herein, but rather includes all technical solutions falling within the scope of the claims.

## Claims

1. A battery (1), comprising:
a cooling structure (12); and
battery cells (13), wherein at least two battery cells (13) are provided and arranged in sequence (C), the battery cell (13) comprises a case (131) and an electrode assembly, a first accommodating cavity is formed in the case (131), the first accommodating cavity is configured to accommodate the electrode assembly, the case (131) is provided with a first surface (1311), the corresponding first surface (1311) of at least one of the battery cells (13) is recessed (A) toward the first accommodating cavity to form a cooling clearance region (13111), and the cooling structure (12) is arranged in each cooling clearance region (13111).

2. The battery (1) according to claim 1, wherein in a direction (A) from the first surface (1311) toward the first accommodating cavity, a depth dimension of the cooling clearance region (13111) is greater than or equal to a dimension of the cooling structure (12), and a surface of the cooling structure (12) away from the cooling clearance region (13111) is lower than or flush with a surface of a non-recessed region (13112) of the first surface (1311).

3. The battery (1) according to claim 1 or 2, wherein in an extension direction (B) of the first surface, a dimension of the cooling clearance region (13111) is greater than the dimension of the cooling structure (12), and the cooling structure (12) and the cooling clearance region (13111) have a clearance gap therebetween.

4. The battery according to claim 2 or 3, wherein a portion of the cooling clearance region (13111) adjacent to the non-recessed region of the first surface (1311) forms a guide surface (134), and the guide surface (134) extends toward a center of the cooling clearance region (13111).

5. The battery (1) according to any one of claims 1 to 4, wherein a surface of the cooling structure (12) facing the cooling clearance region (13111) is a smooth surface, a surface of the cooling clearance region (13111) facing the cooling structure (12) is a smooth surface, and the cooling structure (12) is in abutting contact with the cooling clearance region (13111).

6. The battery (1) according to any one of claims 1 to 5, wherein the battery cell (13) further comprises tabs (132, 133), the tabs (132, 133) are connected to the electrode assembly, the case (131) is provided with second surfaces (13121, 13122), the tabs (132, 133) are arranged on the second surfaces (13121, 13122), and the second surfaces (13121, 13122) are in non-surface contact with the cooling structure (12).

7. The battery (1) according to any one of claims 1 to 6, wherein in an arrangement direction (C) of the at least two battery cells, the cooling clearance region (13111) on each battery cell (13) penetrates through the first surface (1311) thereof, a plurality of the cooling clearance regions (13111) communicate with each other to form a combined cooling clearance region, one cooling structure (12) is provided, and the cooling structure (12) is arranged in the combined cooling clearance region.

8. The battery (1) according to claim 7, wherein the cooling structure (12) comprises a cooling plate (121) and an extension portion (122), the extension portion (122) is arranged on at least one side of the cooling plate (121) in an extension direction (C) of the cooling plate (121), the extension portion (122) communicates with the cooling plate (121), the extension portion (122) is provided with an opening (1221), the cooling plate (122) is arranged in the combined cooling clearance region, and the extension portion (122) is misaligned with the combined cooling clearance region.

9. The battery (1) according to claim 8, wherein an axial direction of the opening (1221) is perpendicular to the extension direction (C) of the cooling plate (121).

10. The battery (1) according to any one of claims 7 to 9, wherein in a direction (B) perpendicular to the arrangement direction within a direction (C) of extension of the cooling clearance region (13111), the cooling clearance region (13111) of each battery cell (13) does not penetrate through the first surface (1311) thereof, and limiting platforms are formed on both sides of the cooling clearance region (13111) to limit the cooling structure.

11. The battery (1) according to claim 10, wherein in the direction (B) perpendicular to the arrangement direction within the direction (C) of extension of the cooling clearance region (13111), the limiting platforms formed on both sides are of a same dimension.

12. The battery (1) according to any one of claims 1 to 11, wherein the battery comprises a box body (11), the box body (11) forms a second accommodating cavity(111), both the cooling structure (12) and the battery cell (13) are accommodated in the second accommodating cavity (111), a first fixing structure is arranged between the cooling structure (12) and the box body (11), and the cooling structure (12) is fixed to the box body (11) through the first fixing structure.

13. The battery (1) according to claim 12, wherein the first fixing structure comprises a first threaded hole formed in the box body (11), a second threaded hole formed in the cooling structure (12), and a threaded fastener, and the threaded fastener passes through the first threaded hole and the second threaded hole in sequence to fix the cooling structure (12) and the box body (11) in a threaded manner.

14. The battery (1) according to any one of claims 1 to 13, wherein a bonding layer is arranged between the cooling structure (12) and the cooling clearance region (13111), and the cooling structure (12) is bonded in the cooling clearance region (13111) through the bonding layer.

15. An electric apparatus, comprising:
the battery (1) according to any one of claims 1 to 14, the battery being configured to supply electric energy.
